# EUROPEAN PATENT SPECIFICATION

(11) **EP 1 424 160 B1**
(45) Date of publication and mention of the grant of the patent: **09.07.2014**
(21) Application number: 03009781.0
(22) Date of filing: 08.05.2003
(51) Int. Cl.: B23Q 1/01, B23D 47/02

(54) **Cutting machine**
Schneidmaschine
Machine de coupe

(30) Priority: 16.05.2002 IT MO20020124
(43) Date of publication of application: 02.06.2004
(73) Proprietor: SKC di Tondini Claudio, I-48010 Cotignola, Ravenna (IT)
(72) Inventor: Tondini, Claudio, 48010 Cotignola (Ravenna) (IT)
(74) Representative: Crugnola, Pietro

(56) References cited:
- DE-B- 1 193 888
- DE-U- 9 005 568
- DE-U- 20 107 761
- DE-U- 29 903 633

## Description

This invention concerns a cutting machine for building, in particular a work-site machine suitable for cutting tiles, stones, stone material, bricks and the like.

From prior art cutting machines are known that are provided with a rotating blade that is actuated around an axis that is substantially horizontal and provided with a carriage slidable along guides that are fixed to a machine frame, said carriage being suitable for transferring a product to be cut towards said blade.

The carriage comprises a metal plate to which a plurality of wheels is fixed by welding, which wheels are suitable for being slidably coupled with said guides to enable the movement of the product.

Dispensers of a jet of water are associated with the blade, which cools the cutting edge of the blade and keeps it clean.

A tank for collecting the cooling and washing water and the waste generated by the cutting operations is furthermore fixed to the frame of the machine in such a manner as to be underneath the carriage and the blade.

DE20107761U discloses frame means for a cutting machine comprising rim means, carriage means and cutting means, wherein the rim means comprises profiled elements that are internally provided with rib means which subdivides said profiled element means into a plurality of chamber means suitable for receiving connecting means arranged for connecting a plurality of portions of said profiled element means to obtain said frame means. DE1193888 discloses frame means for a cutting machine comprising rim means, carriage means and cutting means, wherein the rim means comprises profiled elements.

A drawback of the machines mentioned above consists in the fact that they are provided with a frame obtained from a metal structure, said frame being in fact usually produced with metal material, such as metal sheet, which is appropriately cut, bent and welded.

Said frame has therefore to be fabricated separately and subsequently be associated with the further components that form the machine.

Said frame comprises a workbench, to which the carriage guides and the blade have to be fixed, and a plurality of supporting feet that provide the machine with the necessary stability during operation.

The above description shows that the semi-machined frames are rather cumbersome and are therefore difficult to be stored whilst waiting for them to be subjected to subsequent machining and assembly.

Furthermore, as said frames are usually painted, they may become scratched or damaged during handling.

Another drawback of the prior art machines consists in significant transport difficulties.

The structure of said machines is in fact such that it makes it rather difficult to rationally use the loading compartments of the means of transport, for example a container or the body of a truck.

In particular, two or more machines cannot be associated with one another in such a way that a portion of one of them is received in the zone of a further machine defined by the bottom part of the workbench, by the tank associated with the workbench and by the supporting feet.

A further drawback is that, since the frames are obtained from a metal structure, they have very high dimensional tolerances which causes that finished machines of the same type have dimensions significantly different from one another.

The above machining imprecisions also affect the difficulty of transporting the machines, in as much as the latter, not being exactly the same as one another, cannot be stacked on top of one another to optimise the exploitation of the internal space of said loading compartments.

A still further drawback of the above-described machines is that the creation of the relative frame with a metal structure involves very costly serial production.

Yet another drawback of the prior art machines is that, being provided with a frame with a metal structure, they are rather heavy and are therefore difficult to be manually transferred by an operator between different points of the work site. The great weight of the prior art machines furthermore causes a great increase in transport costs.

An object of the invention is to improve the prior art cutting machines for building.

Another object of the invention is to obtain a cutting machine for building that is particularly light and easy to be transported.

A further object of the invention is to obtain a machine provided with a frame that does not need to be made separately and stored until subsequent assembly operations.

A still further object of the invention is to obtain a machine that takes up an appreciably reduced amount of space during the transport phase.

A further object of the invention is to obtain a cutting machine that can be stacked onto further machines of the same type.

According to the invention, frame means are provided suitable for being associated with a cutting machine for building, comprising rim means to which carriage means suitable for receiving a product to be cut and cutting means suitable for cutting said product are associatable, said rim means comprising profiled element means that is internally provided with rib means which subdivides said profiled element means into a plurality of chamber means, said frame means further comprising connecting means connecting a plurality of portions of said profiled element means to obtain said frame means, said connecting means being provided with appendices, said plurality of chamber means receiving said appendices, said frame means further comprising supporting foot means, said connecting means further comprising compartment means receiving said supporting foot means of said frame means slidable inside said compartment means.

In a preferred embodiment, the profiled element means comprises an aluminium profiled element obtained by extrusion.

In another preferred embodiment, the profiled element means comprises groove means made on a face of said profiled element means and suitable for receiving fixing means for fixing the sliding means to the profiled element means.

Advantageously, the groove means extends longitudinally along the entire length of the profiled element means so as to allow the sliding means to be fixed to any section of the profiled element means.

In a further advantageous embodiment, the profiled element means further comprises cavity means obtained on a further face of the profiled element means, said further face being opposite to said face, said cavity means being suitable for receiving a sharpened end of a cutting blade of the machine.

In this way, the products supported by the profiled element means can be separated in such a way as to create parts with preset dimensions, by subjecting said products to a through cut carried out by the blade.

In a still further preferred embodiment, the profiled element means comprises further cavity means obtained on said further face and contained in a plane tilted by about 45° with respect to the plane containing said cavity means.

Said further cavity means is suitable for receiving said end of the blade to enable tilted cuts to be made in the products.

The invention may be better understood and carried out with reference to the accompanying drawings, which show an exemplifying and non-limitative embodiment thereof, in which:
Figure 1 is a perspective view of a machine provided with the carriage means and the frame means according to the invention;
Figure 2 is an exploded perspective view of the carriage means according to the invention;
Figure 3 is an exploded perspective view of the frame means according to the invention;
Figure 4 is a section taken along a vertical plane of profiled element means suitable for being used to obtain the carriage means of Figure 2;
Figure 5 is a section taken along a vertical plane of further profiled element means suitable for being used to obtain the frame means of Figure 3;
Figure 6 is a side view of connecting means suitable for mutually interconnecting the further profiled element means to obtain the frame means according to the invention;
Figure 7 is a side view of locking means associatable with the connecting means of Figure 6 and suitable for fixing supporting foot means of the machine to the connecting means;
Figure 8 is a side view of the machine of Figure 1, in a work. configuration;
Figure 9 is a view like that of Figure 8, showing the machine in a transport configuration.

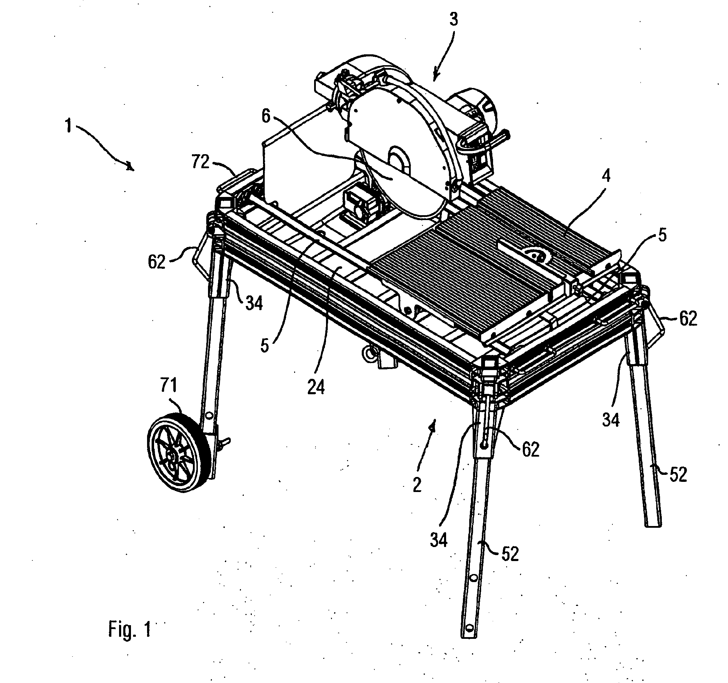

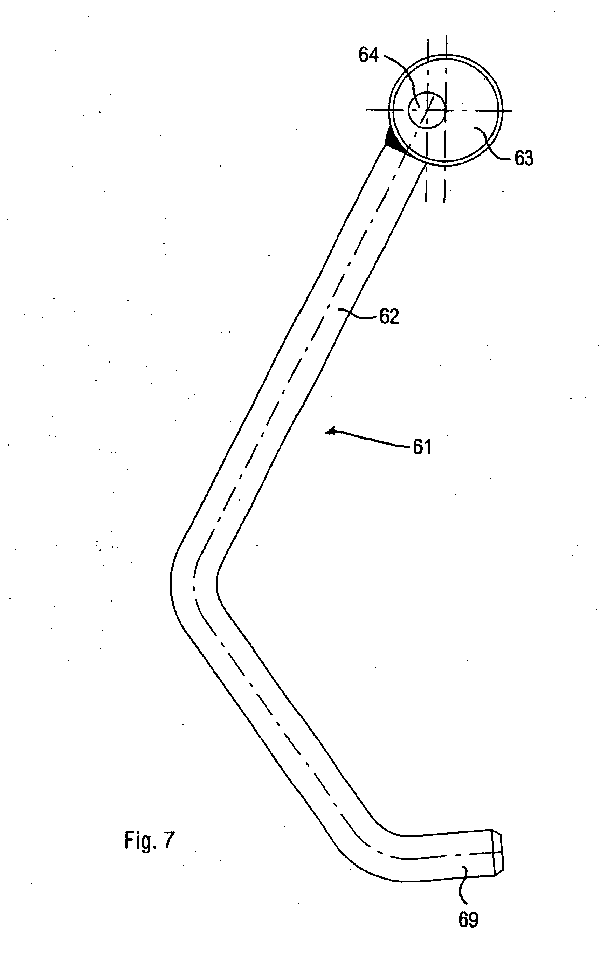

Figures 1 to 9 show a cutting machine for building 1 that is particularly suitable for cutting building products such as tiles, stones, stone material, bricks and the like.

The machine 1 comprises a frame 2 to which cutting means 3 can be fixed that are provided with a blade 6 suitable for cutting said products.

The machine 1 further comprises a carriage 4 slidable on guides 5 that are connected to the frame 2, said carriage 4 being suitable for supporting said building products to move them towards or away from the blade 6.

The cutting means 3 may be placed in a first work position in which the blade 6 is arranged substantially perpendicularly to the plane identified by the carriage 4, and in a second work position in which the blade 6 forms an angle of approximately 45° with respect to the plane defined by the carriage 4.

The machine 1 further comprises a tank 24 associated to the bottom of the frame 2 and suitable for collecting the water used during cutting operations for cooling and keeping clean the blade 6.

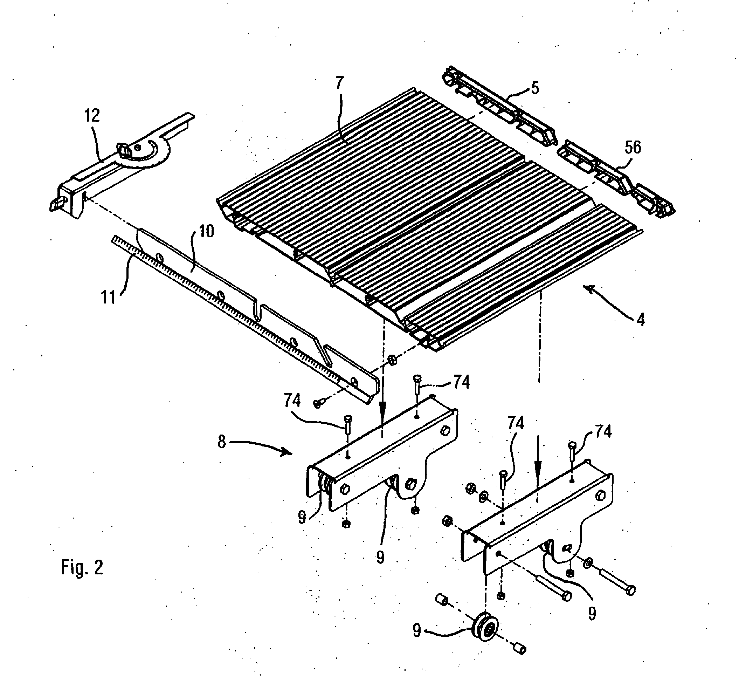

As Figure 2 shows, the carriage 4 comprises a supporting element 7 for supporting a building product to be cut, with which sliding means 8 is associated provided with wheels 9 suitable for engaging with the guides 5.

The carriage 4 further comprises, at one end thereof, a plate 10 that acts as supporting stop for the building products and with which a ruler 11 is associated, said ruler 11 acting as reference for a cutting operator.

The carriage 4 further comprises, at a further end thereof opposite to said end, closing means 56 arranged for preventing water and/or dirt from penetrating inside the supporting element 7.

The carriage 4 further comprises a protractor 12 that enables said products to be cut according to inclined planes.

The supporting element 7 is made from a profiled element 13 that is advantageously obtained in aluminium by extrusion.

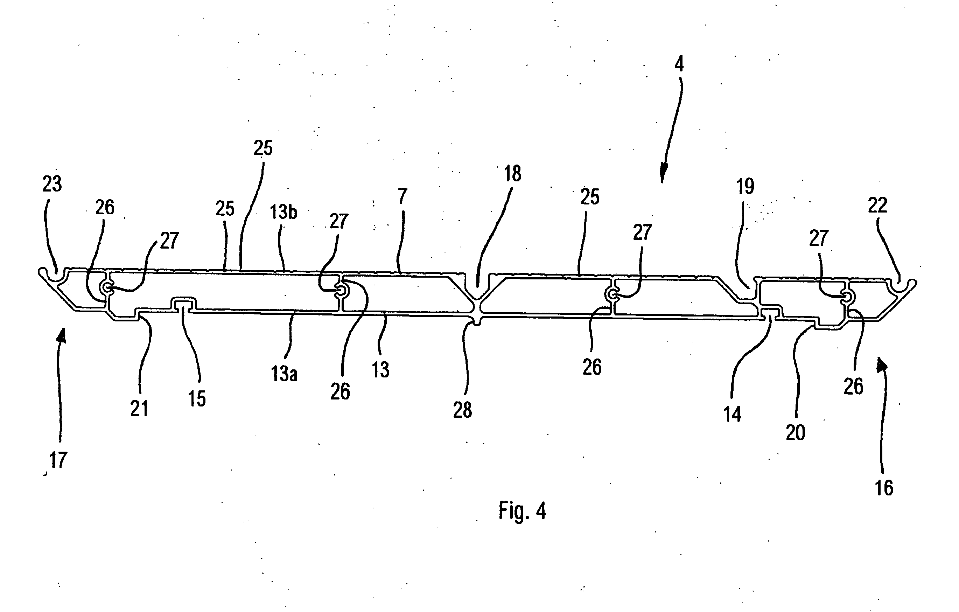

With reference to Figure 4, the profiled element 13 comprises a pair of longitudinal grooves 14, 15 extending along the entire length of the profiled element 13 and suitable for receiving fixing means 74 of the sliding means 8.

The grooves 14, 15 are obtained in opposite end regions 16, 17 of a face 13a of the profiled element 13.

The profiled element 13 further comprises protrusions 20, 21 that project from the face 13a, each of said protrusions 20, 21 being obtained near one of the grooves 14, 15 to constitute a shoulder that enables the sliding means to be correctly positioned 8 and. to prevent said sliding means 8 from shifting once it has been fixed to the profiled element 13.

The profiled element 13 further comprises a cavity 18 obtained on a further face 13b, opposite to the face 13a, substantially in the middle of the profiled element 13.

The cavity 18 is shaped in such a way as to receive a sharpened end of the blade 6, when the latter is in the first operating position described above.

The profiled element 13 is further provided with a further cavity 19 obtained on the further face 13b that is substantially tilted by 45° with respect to the plane identified by the profiled element 13.

The further cavity 19 is therefore suitable for receiving the sharpened end of the blade when the latter is in the second operating position described above.

The cavity 18 and the further cavity 19 are shaped in such a way as to as to extend along the entire length of the profiled element 13.

The profiled element 13 further comprises, on the further face 13b, in the opposite end regions 16, 17, further grooves 22, 23, which further grooves 22, 23 also extend along the entire length of the profiled element 13.

The further grooves 22, 23 are arranged for collecting the cooling and washing water and directing it inside the tank 24.

Furthermore, on the further face 13b of the profiled element 13 slots 25 are obtained that are equidistant from one another, which are preferably arranged at distance of one centimetre from one another, which act as indicator means for a cutting operator.

The profiled element 13 is internally provided with ribs 26 that define a plurality of seats 27 arranged for receiving screws suitable for fixing the plate 10 to the profiled element 13.

The profiled element 13 further comprises a further rib 28 positioned at the cavity 18 and which partially protrudes from the face 13a.

The further rib 28 constitutes a supporting element cooperating with the protrusions 20, 21 to reduce the risk of hot deformation of the profiled element 13, when the latter is ejected from the extrusion unit.

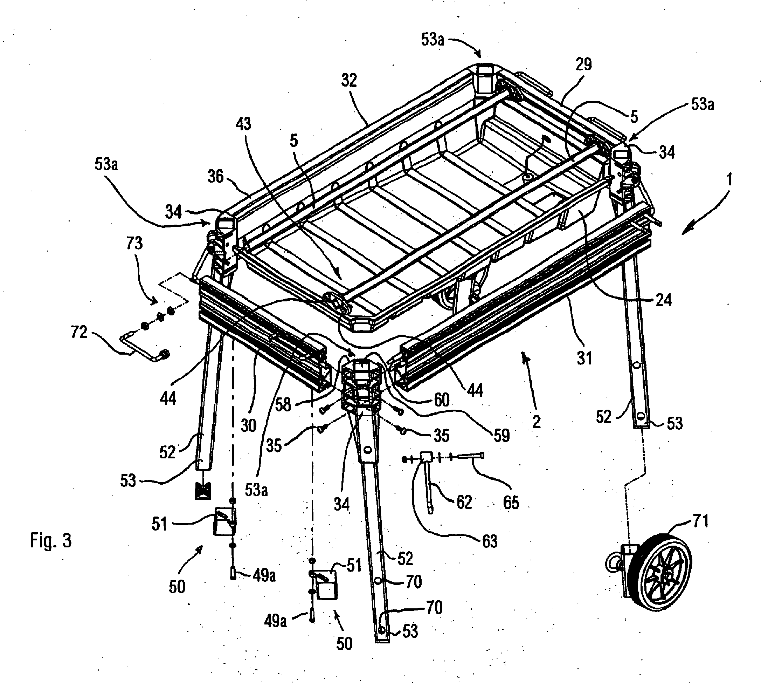

With reference to Figure 3, the frame 2 consists of a first part 29, a second part 30, a third part 31 and a fourth part 32 of a further profiled element 33.

Advantageously, the further profiled element 33 is made of extruded aluminium.

The first part 29, the second part 30, the third part 31 and the fourth part 32 are connected together to form a rim 36 that has a substantially rectangular shape, at the top of which there is connecting means 34 provided with fixing screws 35.

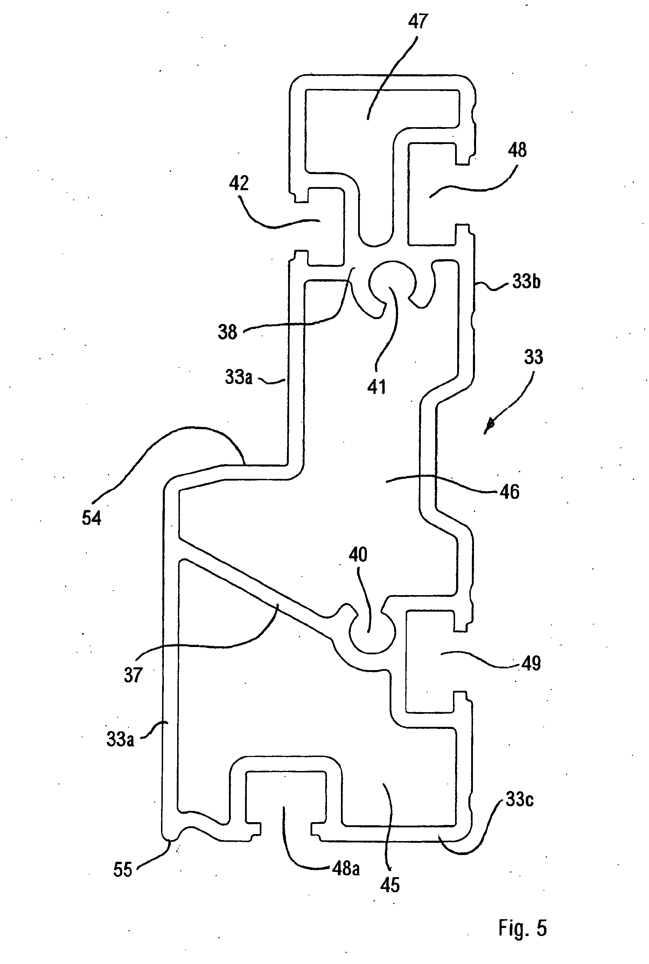

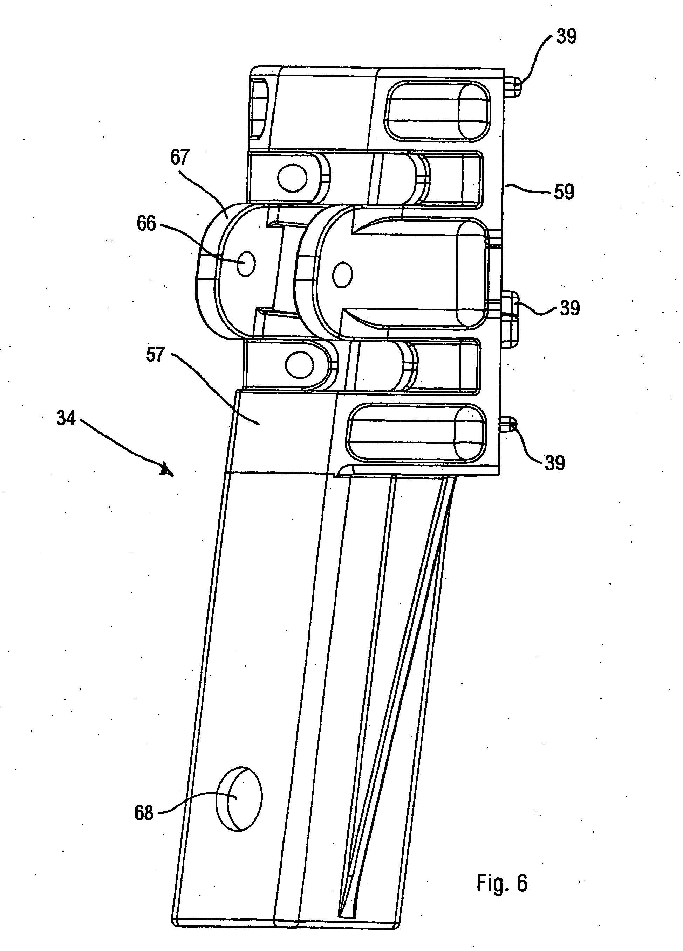

With reference to Figure 5, the further profiled element 33 comprises a rib 37 and a further rib 38 that define inside said further profiled element 33 a first chamber 45, a second chamber 46 and a third chamber 47 arranged for receiving appendices 39 (Figure 6) of the connecting means 34, as will be described in detail below.

The rib 37 and the further rib 38 define a respective seat 40, 41 suitable for receiving a fixing screw 35.

The further profiled element 33 further comprises a groove 42 extending longitudinally therein, said groove 42 opening onto a face 33a of the further profiled element 33 and being suitable for receiving fixing means 43 suitable for fixing the guides 5.

The fixing means 43 comprises screws 44 the head of which are suitable for being laterally inserted inside the groove 42 and for being shapingly received in said groove 42.

The fixing means 43, before the screws 44 are tightened, can be moved along the groove 42 in such a way as to adjust the distance that separates the guide 5.

The use of the further profiled element 33 according to the invention therefore enables frames to be made that can be associated with carriages of dimensions belonging to a wide range of sizes, by simply adjusting the reciprocal distance between the guides 5 in such a way that they can be slidably coupled to the wheels of said carriages.

The use of screws slidable inside the groove 42 further enables the blade 6 and the carriage 4 to be easily assembled in perfect reciprocal alignment.

In this way, the blade 6 is received during cutting operations inside the cavity 18, or inside the further cavity 19.

The groove 42 is further suitable for receiving connecting means of a band, which is not shown, that promotes the conveying of the cooling and washing water inside the tank 24.

Advantageously, said band is made from partially flexible plastic material and has a bottom strip that can be superimposed on a side wall of the tank 24 to promote drainage of the water.

The further profiled element 33 is further provided, on a further face 33b thereof, opposite to the face 33a, with a pair of throats 48, 49 that substantially extend along the entire length thereof.

The throats 48, 49 are arranged in such a way that the throat 48 is positioned at a vertical height higher than the height of the throat 49, said throats 48 and 49 being suitable for receiving a fixing element of a supporting structure of the cutting means 3.

Advantageously, for fixing the cutting means 3 it is not necessary to obtain holes in the frame 2: said fixing element is in fact made to slide along the further profiled element 33 until it reaches a desired position wherein it can be locked by tightening the screws with which it is provided.

The further profiled element 33 further comprises, on a still further face 33c, that is substantially perpendicular to the face 33a and to the further face 33b, a further groove 48a arranged for receiving fixing screw means 49a of stacking promoter means 50 shown in Figure 3.

As will be explained in greater detail below, the machine 1 comprises supporting feet 52 that can be transferred from an operating position, shown in Figure 3, in which the supporting feet project below the frame 2, in such a way that ends 53 thereof can be positioned on a supporting plane 77 underneath, to a rest position, in which the supporting feet 52 are caused to slide with respect to the frame 2 until they protrude above the frame 2.

In such rest position, two or more machines 1 can be advantageously stacked to minimise space occupied by said machines.

For this purpose, the stacking promoter means 50 comprises beaker means 51 arranged for receiving further ends 53a, opposite to the aforesaid ends 53, of the supporting feet of a further machine 1, thus substantially preventing the shifting of one machine with respect to the other.

The further profiled element 33 further comprises a shelf 54, that substantially extends perpendicularly to the wall 33a and acts as a supporting element for the tank 24.

Alternatively, the tank 24 can be fixed to the frame 2 by connecting means that are engaged in the further groove 48a.

The further profiled element 33 is further provided, at the edge defined by the face 33a and by the still further face 33c, with a protuberance 55 that acts as a gutter to promote the fall into the tank 24 of drops of water descending along the face 33a, if the tank is connected to the frame 2 at the further groove 48a.

As Figures 3 and 6 show, the connecting means 34 comprises body means 57, made of metal, advantageously obtained by casting, comprising a pair of walls 58, 59 that face portions of the further profiled element 33 that are to be interconnected to obtain the frame 2.

In the walls 58, 59 holes are obtained suitable for receiving the fixing screws 35 that engage in the seats 40, 41 of the further profiled element 33.

Appendices 39 extend from the walls 58, 59 and are received in the first chamber 45, in the second chamber 46 and in the third chamber 47 of the further profiled element 33, said appendices 39 acting as stiffing elements of the structure of the frame 2. In the body means 57 compartments 60 are defined arranged for receiving supporting feet 52 of the machine 1.

The supporting feet 52 can slide inside the compartments 60 to be transferred between the operating position and the rest position that have been described above.

Advantageously, the compartments 60 extend obliquely with respect to the plane defined by the frame 2, in such a way that the supporting feet 52 diverge reciprocally in the operating position, to improve the stability of the machine 1, and converge reciprocally in the rest position, to minimise the space occupied by the machine 1.

Locking means 61 is associated to the body means 57 to prevent the supporting foot 52 from sliding inside the compartment 60 when the supporting foot 52 is in the aforesaid operating position, or in the aforesaid rest position.

The locking means 61 comprises a lever 62 that controls a presser roller 63 interacting with the supporting foot 52 to press the supporting foot 52 against the walls of the compartment 60.

The presser roller is provided with a longitudinal hole 64 suitable for receiving a pin 65 engaging holes 66 obtained in projecting portions 67 of the body means 57.

The longitudinal hole 64 is not coaxial with the presser roller 63, the presser roller 52 is therefore associated with the body means 57 in such a way as to be eccentric.

The body means 57 is further provided with an opening 68 through which an end portion 69 of the lever 62 can pass to engage further openings 70 obtained in longitudinally consecutive sections of the supporting foot 52.

In this way, the end portion 69 is inserted inside the opening 68 and the further openings 70 and thereby performs further locking in addition to that achieved by the eccentric presser roller 63.

The machine 1 can be further provided with handles 72 that make lifting and subsequent transfer simpler.

The handles 72 can be fixed to the frame 2 through hook means 73 suitable for being received inside the throats 48, 49 of the further profiled element 33.

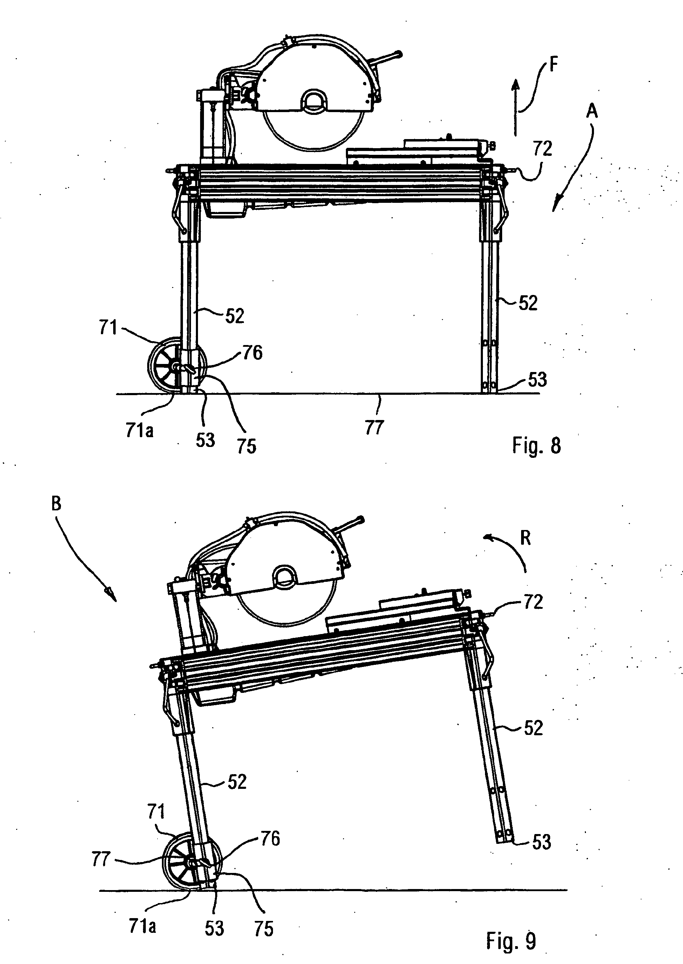

As shown is Figures 8 and 9, wheels 71 can be associated to the supporting feet 52, said wheels 71 promotes transferring of the machine 1.

Advantageously, the wheels 71 are associated to two of the four supporting feet 52 of the machine 1, for example to the supporting feet 52 arranged in the front part of the machine 1. The wheels 71 are rotatably supported by sleeve means 75 slidable on the supporting feet 52.

The sleeve means 75 is provided with a threaded hole suitable for receiving a locking screw 76 arranged for being pressed against a supporting foot 52. In this way, the sleeve means 75 is caused to slide along the supporting feet 52 until it reaches a preset position, subsequently the sleeve means 75 is fixed to said position by adjusting the lock screw 76.

As shown in Figure 8, the machine 1 can achieve an operating configuration A in which the ends 53 of the supporting feet 52 and the bottom portions 71a of the wheels 71 are in contact with the supporting plane 77.

In said operating configuration A, the machine 1 has good stability, which enables precise cutting operations to be performed.

As Figures shown in 8 and 9, by grasping the handles 72 and exerting force in the direction of the arrow F, it is possible to cause a rotation R of the machine 1 around pin means 78 that connects the wheels 71 to the sleeve means 75 until the machine 1 is placed in a transport configuration B.

After said rotation, the ends 53 of the supporting feet 52 are lifted up with respect to the supporting plane 77, in particular not only the ends 53 of the supporting feet 52, to which ends the wheels 71 are not associated, are lifted up, but also the ends 53 of the supporting feet 52, to which the wheels 71 are fixed, are lifted up: this enables transport of the machine 1 to be significantly facilitated inasmuch as it can be. easily transferred by making the wheels 71 slide on the supporting plane 77, said wheels 71 further supporting a considerable part of the weight of the machine 1.

## Claims

1. Frame means (2) suitable for being associated with a cutting machine (1) for building, comprising rim means (36) to which carriage means (4) suitable for receiving a product to be cut and cutting means (3) suitable for cutting said product are associatable, said rim means (36) comprising profiled element means (33) that is internally provided with rib means (37, 38) which subdivides said profiled element means (33) into a plurality of chamber means (45, 46, 47), **characterized in that** said frame means (2) further comprises connecting means (34) connecting a plurality of portions (29, 30, 31, 32) of said profiled element means (33) to obtain said frame means (2), said connecting means being provided with appendices, said plurality of chamber means receiving said appendices, said frame means (2) further comprising supporting foot means (52), said connecting means (34) further comprising compartment means (60) receiving said supporting foot means (52) of said frame means (2) slidable inside said compartment means (60).

2. Frame means according to claim 1, wherein said profiled element means (33) comprises seat means (40, 41) arranged for receiving fixing screw means (35) suitable for fixing said connecting means (34) to said profiled element means (33).

3. Frame means according to claim 1 or 2, wherein said profiled element means (33) comprises cavity means (42) defined on a face (33a) of said profiled element means, said cavity (42) means being suitable for receiving guide means (5) for guiding said carriage means (4).

4. Frame means according to claim 3, wherein said cavity means (42) extends longitudinally along the entire length of said profiled element means (33).

5. Frame means according to any one of claims 1 to 4, wherein said profiled element means (33) comprises further cavity means (33b) suitable for receiving fixing means for fixing said cutting means (3) and/or handle means (72) arranged for facilitating the transport of said machine (1).

6. Frame means according to claim 5 as appended to claim 3, or 4, wherein said cavity means (42) is defined on a further face (33b) of said profiled element means opposite to said face (33a).

7. Frame means according to claim 3, or 4, or according to claim 5 as appended to claim 3, or 4, or according to claim 6, wherein said profiled element means (33) comprises shelf means (54) protruding from said face (33a) and suitable for supporting collection tank means (24) associatable to the bottom of said frame means (2).

8. Frame means according to any one of preceding claims, wherein said connecting means (34) comprises a body (57) obtained by casting a metal material.

9. Frame means according to any one of claims 1 to 8, wherein said compartment means (60) extends obliquely with respect to a plane defined by said frame means (2), in such a way that said supporting foot means (52) diverges reciprocally in an operating position in which said supporting foot means (52) projects below said frame means (2) and converges reciprocally in a rest position, in which said supporting foot means (52) projects above said frame means (2).

10. Frame means according to any one of claims 1 to 9, wherein locking means (61) is associated to said connecting means (34), said locking means (61) being arranged for locking said supporting foot means (52) of said machine (1) inside said compartment means (60).

11. Frame means according to claim 10, wherein said locking means (61) comprises eccentric locking means (63).

12. Frame means according to any one of claims 3 to 11, wherein said profiled element means (33) further comprises, on a still further face (33c) arranged transversally with respect to said face (33a), further groove means (48a) arranged for receiving container means (51) suitable for containing ends (53a) of said supporting foot means (52) of a further machine (1) positioned on said machine (1).

## Patentansprüche

1. Rahmenmittel (2), die dazu geeignet sind, mit einer Schneidemaschine (1) für Bauarbeiten in Verbindung gebracht zu werden, mit Randmitteln (36), mit denen Verlagerungsmittel (4), die zum Aufnehmen eines zu schneidenden Erzeugnisses geeignet sind, und Schneidemittel (3) in Verbindung bringbar sind, die zum Schneiden des Erzeugnisses geeignet sind, wobei die Randmittel (36) Profilelementmittel (33) aufweisen, die innen mit Rippenmitteln (37, 38) versehen sind, die die Profilelementmittel (33) in eine Mehrzahl von Kammermitteln (45, 46, 47) unterteilen, **dadurch gekennzeichnet, dass** die Rahmenmittel (2) weiterhin Verbindungsmittel (34) aufweisen, die eine Mehrzahl von Abschnitten (29, 30, 31, 32) der Profilelementmittel (33) verbinden, um die Rahmenmittel (2) zu erhalten, wobei die Verbindungsmittel mit Fortsätzen versehen sind, wobei die Mehrzahl von Kammermitteln die Fortsätze aufnehmen, wobei die Rahmenmittel (2) weiterhin Stützfußmittel (52) aufweisen, wobei die Verbindungsmittel (34) weiterhin Abteilmittel (60) aufweisen, die die Stützfußmittel (52) der Rahmenmittel (2) verschiebbar innerhalb der Abteilmittel (60) aufnehmen.

2. Rahmenmittel nach Anspruch 1, wobei die Profilelementmittel (33) Sitzmittel (40, 41) aufweisen, die zum Aufnehmen von Befestigungsschraubenmitteln (35) ausgebildet sind, die zum Festlegen der Verbindungsmittel (34) an den Profilelementmitteln (33) geeignet sind.

3. Rahmenmittel nach Anspruch 1 oder 2, wobei die Profilelementmittel (33) Hohlraummittel (42) aufweisen, die auf einer Seite (33a) der Profilelementmittel definiert sind, wobei die Hohlraummittel (42) zum Aufnehmen von Führungsmitteln (5) zum Führen der Verlagerungsmittel (4) geeignet sind.

4. Rahmenmittel nach Anspruch 3, wobei die Hohlraummittel (42) sich in Längsrichtung entlang der gesamten Länge der Profilelementmittel (33) erstrecken.

5. Rahmenmittel nach einem der Ansprüche 1 bis 4, wobei die Profilelementmittel (33) weitere Hohlraummittel (33b) aufweisen, die zum Aufnehmen von Festlegemitteln zum Festlegen der Schneidemittel (3) und/oder von Handhabungsmitteln (72) geeignet sind, die zum Erleichtern des Transports der Maschine (1) ausgebildet sind.

6. Rahmenmittel nach Anspruch 5, sofern dieser von Anspruch 3 abhängig ist, oder Anspruch 4, wobei die Hohlraummittel (42) auf einer weiteren Seite (33b) der Profilelementmittel der genannten Seite (33a) gegenüberliegend definiert sind.

7. Rahmenmittel nach Anspruch 3 oder 4 oder nach Anspruch 5, sofern dieser von Anspruch 3 oder 4 abhängig ist, oder nach Anspruch 6, wobei die Profilelementmittel (33) Schalenmittel (54) aufweisen, die von der genannten Seite (33a) hervorstehen und zum Stützen von Sammeitankmitteln (24) geeignet sind, die mit dem Boden der Rahmenmittel (2) in Verbindung bringbar sind.

8. Rahmenmittel nach einem der vorhergehenden Ansprüche, wobei die Verbindungsmittel (34) einen Körper (57) aufweisen, der durch Abformen eines metallischen Materials erhalten wird.

9. Rahmenmittel nach einem der Ansprüche 1 bis 8, wobei die Abteilmittel (60) sich schräg bezüglich einer Ebene erstrecken, die durch die Rahmenmittel (2) definiert ist, derart, dass die Stützfußmittel (52) in einer Betriebsstellung, in der die Stützfußmittel (52) unter den Rahmenmittel (2) vorspringen, wechselseitig divergieren, und in einer Ruhestellung, in der die Stützfußmittel (52) oberhalb der Rahmenmittel (2) vorspringen, wechselseitig konvergieren.

10. Rahmenmittel nach einem der Ansprüche 1 bis 9, wobei Verriegelungsmittel (61) mit den Verbindungsmitteln (34) in Verbindung stehen, wobei die Verriegelungsmittel (61) zum Verriegeln der Stützfußmittel (52) der Maschine (1) in den Abteilmitteln (30) ausgebildet sind.

11. Rahmenmittel nach Anspruch 10, wobei die Verriegelungsmittel (61) exzentrische Verriegelungsmittel (63) aufweisen.

12. Rahmenmittel nach einem der Ansprüche 3 bis 11, wobei die Profilelementmittel (33) weiterhin auf einer noch weiteren Seite (33c), die bezüglich der genannten Seite (33a) querverlaufend angeordnet ist, weitere Nutenmittel (48a) aufweisen, die zum Aufnehmen von Behältermitteln (51) ausgebildet sind, die zum Enthalten von Enden (53a) der Stützfußmittel (52) einer weiteren Maschine (1), die auf der genannten Maschine (1) positioniert ist, ausgebildet sind.

## Revendications

1. Moyens de châssis (2) aptes à être associés à une machine de coupe (1) dans le domaine de la construction, comprenant des moyens d'armature (36) auxquels des moyens de chariot (4) aptes à recevoir un produit devant être coupé et des moyens de coupe (3) appropriés pour la découpe dudit produit peuvent être associés, lesdits moyens d'armature (36) comprenant des moyens d'élément profilé (33) qui sont pourvus de moyens de nervure (37, 38) disposés de manière interne et qui subdivisent lesdits moyens d'élément profilé (33) en une pluralité de moyens de chambre (45, 46, 47), **caractérisés en ce que** lesdits moyens de châssis (2) comprennent en outre des moyens de liaison (34) reliant une pluralité de tronçons (29, 30, 31, 32) desdits moyens d'élément profilé (33) afin d'obtenir lesdits moyens de châssis (2), lesdits moyens de liaison étant pourvus d'éléments annexes, ladite pluralité de moyens de chambre recevant lesdits éléments annexes, lesdits moyens de châssis (2) comprenant en outre des moyens de pied de support (52), lesdits moyens de liaison (34) comprenant en outre des moyens de compartiment (60) recevant lesdits moyens de pied de support (52) desdits moyens de châssis (2), aptes à coulisser à l'intérieur desdits moyens de compartiment (60).

2. Moyens de châssis selon la revendication 1, dans lesquels lesdits moyens d'élément profilé (33) comprennent des moyens d'assise (40, 41) disposés de manière à recevoir des moyens de vis de fixation (35) appropriés pour la fixation desdits moyens de liaison (34) auxdits moyens d'élément profilé (33).

3. Moyens de châssis selon la revendication 1 ou 2, dans lesquels lesdits moyens d'élément profilé (33) comprennent des moyens de cavité (42) définis sur une face (33a) desdits moyens d'élément profilé, lesdits moyens de cavité (42) étant aptes à recevoir des moyens de guidage (5) destinés à guider lesdits moyens de chariot (4).

4. Moyens de châssis selon la revendication 3, dans lesquels lesdits moyens de cavité (42) s'étendent longitudinalement le long de toute la longueur desdits moyens d'élément profilé (33).

5. Moyens de châssis selon l'une quelconque des revendications 1 à 4, dans lesquels lesdits moyens d'élément profilé (33) comprennent des moyens de cavité supplémentaires (33b) aptes à recevoir des moyens de fixation destinés à fixer lesdits moyens de coupe (3) et/ou des moyens de poignée (72) disposés pour faciliter le transport de ladite machine (1).

6. Moyens de châssis selon la revendication 5 lorsqu'elle dépend de la revendication 3, ou selon la revendication 4, dans lesquels lesdits moyens de cavité (42) sont définis sur une autre face (33b) desdits moyens d'élément profilé opposée à ladite face (33a).

7. Moyens de châssis selon la revendication 3 ou 4, ou selon la revendication 5 lorsqu'elle dépend de la revendication 3 ou 4, ou selon la revendication 6, dans lesquels lesdits moyens d'élément profilé (33) comprennent des moyens de plate-forme (54) disposés en épaulement par rapport à ladite face (33a) et aptes à porter des moyens de bac de collecte (24) pouvant être associés à la partie inférieure desdits moyens de châssis (2).

8. Moyens de châssis selon l'une quelconque des revendications précédentes, dans lesquels lesdits moyens de liaison (34) comprennent un corps (57) obtenu par une opération de coulée d'un matériau métallique.

9. Moyens de châssis selon l'une quelconque des revendications 1 à 8, dans lesquels lesdits moyens de compartiment (60) s'étendent de manière oblique par rapport à un plan défini par lesdits moyens de châssis (2), d'une manière telle que lesdits moyens de pied de support (52) divergent les uns par rapport aux autres dans une position de fonctionnement dans laquelle lesdits moyens de pied de support (52) se situent au-dessous desdits moyens de châssis (2), et convergent les uns par rapport aux autres dans une position de repos, dans laquelle lesdits moyens de pied de support (52) se situent au-dessus desdits moyens de châssis (2).

10. Moyens de châssis selon l'une quelconque des revendications 1 à 9, dans lesquels des moyens de blocage (61) sont associés auxdits moyens de liaison (34), lesdits moyens de blocage (61) étant prévus pour bloquer lesdits moyens de pied de support (52) de ladite machine (1) à l'intérieur desdits moyens de compartiment (60).

11. Moyens de châssis selon la revendication 10, dans lesquels lesdits moyens de blocage (61) comprennent des moyens de blocage excentriques (63).

12. Moyens de châssis selon l'une quelconque des revendications 3 à 11, dans lesquels lesdits moyens d'élément profilé (33) comprennent en outre, sur encore une autre face (33c) disposée transversalement par rapport à ladite face (33a), des moyens de rainure supplémentaires (48a) prévus pour recevoir des moyens de logement (51) aptes à contenir des extrémités (53a) desdits moyens de pied de support (52) d'une autre machine (1) mise en place sur ladite machine (1).
